# EUROPEAN PATENT SPECIFICATION

(11) **EP 3 748 723 B1**
(45) Date of publication and mention of the grant of the patent: **21.10.2026**
(21) Application number: 20176669.8
(22) Date of filing: 26.05.2020
(51) Int. Cl.: H01M 10/613, H01M 10/647, H01M 10/654, H01M 10/6556, H01M 10/6568

(54) **BATTERY MODULE**
BATTERIEMODUL
MODULE DE BATTERIE

(30) Priority: 27.05.2019 KR 20190062049
(43) Date of publication of application: 09.12.2020
(73) Proprietor: SK On Co., Ltd., Seoul 03161 (KR)
(72) Inventor: Kang, Hyeong Kwan, 34124 Daejeon (KR); Lee, Tae Gu, 34124 Daejeon (KR); Kim, Kwan Yong, 34124 Daejeon (KR)
(74) Representative: Stolmár & Partner Patentanwälte PartG mbB

(56) References cited:
- EP-A1- 3 352 291
- WO-A1-2018/131776
- CN-U- 208 570 859
- US-A1- 2018 138 565
- US-A1- 2019 312 322

## Description

### BACKGROUND

The present disclosure relates to a battery module according to the preamble of claim 1, as known for example from CN 208 570 859 U.

Secondary batteries, unlike primary batteries, may be charged and discharged, and thus, may be applied to devices within various fields, such as digital cameras, cellphones, laptops, and hybrid vehicles. Examples of the secondary battery include a nickel-cadmium battery, a nickel-metal hydride battery, a nickel-hydrogen battery, a lithium secondary battery and the like.

Among these secondary batteries, many studies are being conducted into lithium secondary batteries having high energy density and discharge voltages. Recently, lithium secondary batteries have been manufactured as pouch-type battery cells with flexibility to be configured and used in the form of a module through the connection of a plurality of pieces.

However, in the related art case, a cooling device for cooling a battery module is configured separately from the battery module, and there may be a problem in that cooling loss may occur.

### SUMMARY

An aspect of the present disclosure is to provide a battery module in which the cooling performance of a battery cell may be increased.

According to an aspect of the present disclosure, a battery module as defined in claim 1 is provided.

The battery module may further include a first case including the lower plate and a second case disposed on an upper portion of the cell assembly and coupled to the first case. The first case may have an insertion groove into which a lower end of the second case is inserted.

The second case may include an upper plate disposed on an upper portion of the cell assembly, and at least one second side plate extending from the upper plate and disposed on a side of the cell assembly. A lower end of the second side plate may be inserted into the insertion groove.

The cooling passage may be disposed between the inner plate and the outer plate.

The battery module may further include an inlet and an outlet fastened to the inner plate and used as passages for cooling water to move to the cooling passage.

The first joining portion may further include a joining member disposed along an edge of the outer plate to join the outer plate to the inner plate.

The first joining portion may be provided by cold metal transfer (CMT) welding.

The second joining portion may be spaced apart from the first joining portion.

The second joining portion may be provided by friction stir welding (FSW).

The inner plate and the outer plate may be formed of the same material.

### BRIEF DESCRIPTION OF DRAWINGS

The above and other aspects, features, and advantages of the present disclosure will be more clearly understood from the following detailed description, taken in conjunction with the accompanying drawings, in which:
FIG. 1 is a perspective view schematically illustrating a battery module according to an exemplary embodiment;
FIG. 2 is an exploded perspective view of the battery module illustrated in FIG. 1;
FIG. 3 is a perspective view of a battery cell illustrated in FIG. 2;
FIG. 4 is a cross-sectional view taken along line I-I' of FIG. 1;
FIG. 5 is a bottom view of the battery module illustrated in FIG. 1;
FIG. 6 is an exploded perspective view of a first case illustrated in FIG. 1; and
FIG. 7 is an enlarged view of portion A of FIG. 1.

### DETAILED DESCRIPTION

The following detailed description is provided to assist the reader in gaining a comprehensive understanding of the methods, apparatuses, and/or systems described herein. The sequences of operations described herein are merely examples, and are not limited to those set forth herein, but may be changed as will be apparent to one of ordinary skill in the art, with the exception of operations necessarily occurring in a certain order. Also, descriptions of functions and constructions that would be well known to one of ordinary skill in the art may be omitted for increased clarity and conciseness.

The features described herein may be embodied in different forms, and are not to be construed as being limited to the examples described herein. Rather, the examples described herein have been provided so that this disclosure will be thorough and complete, and will fully convey the scope of the disclosure to one of ordinary skill in the art.

Herein, it is noted that use of the term "may" with respect to an example or embodiment, e.g., as to what an example or embodiment may include or implement, means that at least one example or embodiment exists in which such a feature is included or implemented while all examples and embodiments are not limited thereto.

Throughout the specification, when an element, such as a layer, region, or substrate, is described as being "on," "connected to," or "coupled to" another element, it may be directly "on," "connected to," or "coupled to" the other element, or there may be one or more other elements intervening therebetween. In contrast, when an element is described as being "directly on," "directly connected to," or "directly coupled to" another element, there may be no other elements intervening therebetween.

As used herein, the term "and/or" includes any one and any combination of any two or more of the associated listed items.

Although terms such as "first," "second," and "third" may be used herein to describe various members, components, regions, layers, or sections, these members, components, regions, layers, or sections are not to be limited by these terms. Rather, these terms are only used to distinguish one member, component, region, layer, or section from another member, component, region, layer, or section. Thus, a first member, component, region, layer, or section referred to in examples described herein may also be referred to as a second member, component, region, layer, or section without departing from the teachings of the examples.

Spatially relative terms such as "above," "upper," "below," and "lower" may be used herein for ease of description to describe one element's relationship to another element as illustrated in the figures. Such spatially relative terms are intended to encompass different orientations of the device in use or operation in addition to the orientation depicted in the figures. For example, if the device in the figures is turned over, an element described as being "above" or "upper" relative to another element will then be "below" or "lower" relative to the other element. Thus, the term "above" encompasses both the above and below orientations depending on the spatial orientation of the device. The device may also be oriented in other ways (for example, rotated 90 degrees or at other orientations), and the spatially relative terms used herein are to be interpreted accordingly.

The terminology used herein is for describing various examples only, and is not to be used to limit the disclosure. The articles "a," "an," and "the" are intended to include the plural forms as well, unless the context clearly indicates otherwise. The terms "comprises," "includes," and "has" specify the presence of stated features, numbers, operations, members, elements, and/or combinations thereof, but do not preclude the presence or addition of one or more other features, numbers, operations, members, elements, and/or combinations thereof.

Due to manufacturing techniques and/or tolerances, variations of the shapes illustrated in the drawings may occur. Thus, the examples described herein are not limited to the specific shapes illustrated in the drawings, but include changes in shape that occur during manufacturing.

The features of the examples described herein may be combined in various ways as will be apparent after an understanding of the disclosure of this application. Further, although the examples described herein have a variety of configurations, other configurations are possible as will be apparent after an understanding of the disclosure of this application.

The drawings may not be to scale, and the relative size, proportions, and depiction of elements in the drawings may be exaggerated for clarity, illustration, and convenience.

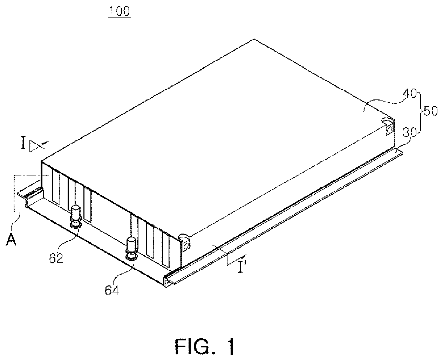

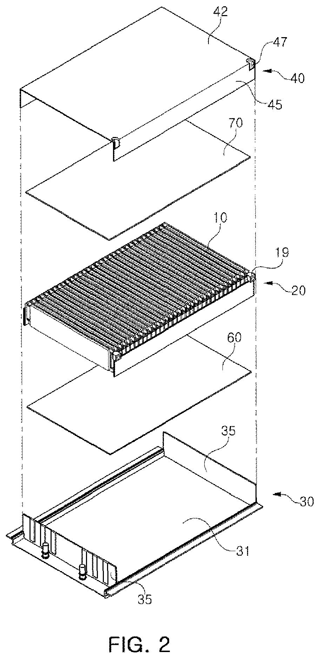

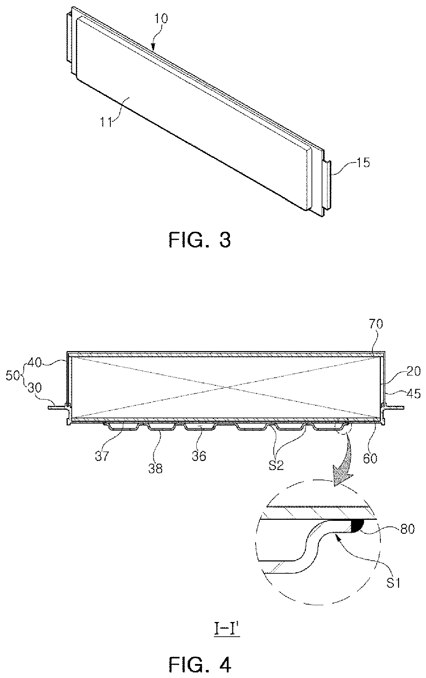

FIG. 1 is a perspective view schematically showing a battery module according to an exemplary embodiment, and FIG. 2 is an exploded perspective view of the battery module illustrated in FIG. 1. FIG. 3 is a perspective view of a battery cell illustrated in FIG. 2, and FIG. 4 is a cross-sectional view taken along line I-I' of FIG. 1.

Referring to FIGS. 1 to 4, a battery module 100 according to an exemplary embodiment each have a substantially hexahedral shape, and may include a cell assembly 20 and a case 50 protecting the cell assembly 20 from the outside.

The cell assembly 20 includes a plurality of battery cells 10.

In the case of the battery cell 10, a plurality of battery cells may be disposed side by side, and may have a structure in which an electrode tab protrudes outward from the body. The battery cell 10 may be, for example, a pouch type secondary battery.

The battery cell 10 may be configured to have a form in which an electrode assembly (not illustrated) is accommodated in a pouch 11 as illustrated in FIG. 3. The electrode assembly includes a plurality of electrode plates and electrode tabs and is accommodated in the pouch 11. In this case, the electrode plate is comprised of a positive electrode plate and a negative electrode plate, and the electrode assembly may be configured to have a stacked form in such a manner that the positive electrode plate and the negative electrode plate are stacked so that wide surfaces face each other with a separator therebetween.

The positive electrode plate and the negative electrode plate are formed in a structure in which an active material slurry is applied to a current collector, and the slurry may be formed by stirring a granular active material, an auxiliary conductor, a binder, and a plasticizer in a state in which a solvent is added.

In addition, in the electrode assembly, a plurality of positive electrode plates and a plurality of negative electrode plates are stacked in a vertical direction. In this case, the electrode tab is respectively provided on the plurality of positive electrode plates and the plurality of negative electrode plates, and may be connected to the same electrode lead 15 by contacting each other with the same polarity.

The pouch 11 is formed in a container shape to provide an inner space in which the electrode assembly and the electrolyte are accommodated. In this case, a portion of the electrode lead 15 of the electrode assembly is exposed outwardly of the pouch 11.

The battery cell 10 configured as described above generates current as a nickel metal hydride (Ni-MH) battery or a lithium ion (Li-ion) battery capable of charging and discharging. In addition, the battery cells 10 are vertically erected in the case 50 to be described later, to be stacked in the left and right directions.

In addition, the cell assembly 20 may include a bus bar electrically connecting the electrode leads 15 of the battery cells 10, a connection terminal 19 electrically connecting the battery cells 10 to an external device, and a voltage sensing unit sensing the voltage of the battery cells 10. Since the bus bar, the connection terminal 19, and the voltage sensing unit are well-known components, detailed descriptions thereof will be omitted.

The case 50 defines the exterior of the battery module 100, and may accommodate the cell assembly 20 therein to protect the cell assembly 20 from the external environment. In addition, the case 50 of this embodiment also functions as a cooling member of the battery module 100.

The case 50 according to the exemplary embodiment may include a first case 30 coupled to a lower portion of the cell assembly 20 and a second case 40 coupled to an upper portion of the cell assembly 20.

At least one of the first case 30 and the second case 40 functions as a cooling member of the battery module 100. In the case of this embodiment, the first case 30 may function as a cooling member, but the configuration of the present disclosure is not limited thereto. For example, in the case in which the height of the battery cell 10 is relatively great, the second case 40 may also be configured to function as a cooling member having the same shape as the first case 30.

The first case 30 may include a lower plate 31 disposed below the cell assembly 20 to support lower surfaces of the battery cells 10, and at least one or more first side plates 35 supporting the side of the cell assembly 20. The lower plate 31 and the first side plate 35 may be configured by pressing a metal plate. Therefore, the lower plate 31 and the first side plate 35 may be integrally formed, but the configuration of the embodiment is not limited thereto. For example, the first side plate 35 and the lower plate 31 may also be configured as independent elements, as required.

The lower plate 31 supports the lower surfaces of the battery cells 10, and simultaneously, may cool the battery cells 10.

The first side plates 35 may be formed to extend from both sides of the lower plate 31, and may be disposed on the sides of the cell assembly 20 disposed therein.

To firmly support the cell assembly 20, the first side plate 35 may be configured in such a manner that the inner side contacts the cell assembly 20, but the embodiment is not limited thereto. For example, various modifications may be applied as required, such as interposing a heat dissipation pad or a buffer member between the first side plate 35 and the cell assembly 20.

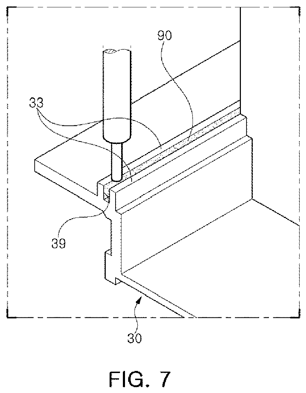

FIG. 7 is an enlarged view of portion A of FIG. 1, and referring to FIG. 7 together, the lower plate 31 may include an insertion groove 39. The insertion groove 39 is a groove disposed outside of a region in which the cell assembly 20 is disposed, and a second side plate 45 of the second case 40 may be inserted into the insertion groove 39 when the second case 40 and the first case 30 are coupled. Therefore, the insertion groove 39 may be disposed in a position corresponding to a lower end of the second side plate 45 and may be formed as a linear groove.

In this embodiment, the insertion groove 39 may be formed between two linear guides 33 protruding from the upper surface of the lower plate 31, but the embodiment is not limited thereto. For example, various modifications may be applied, such as omitting a linear guide and forming an insertion groove as a groove having a concave shape that is concave into a lower portion of the lower plate 31.

In addition, the lower plate 31 according to this embodiment includes an inner plate 37 and an outer plate 38.

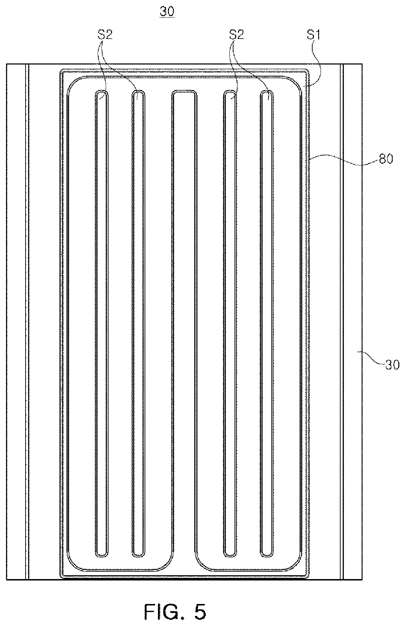

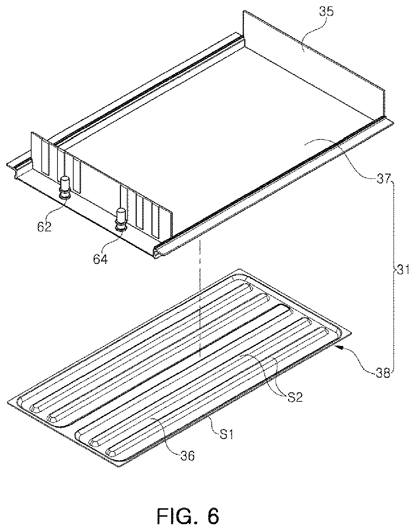

FIG. 5 is a bottom view of the battery module illustrated in FIG. 1, and FIG. 6 is an exploded perspective view of the first case illustrated in FIG. 1.

Referring to FIGS. 5 and 6 together, the inner plate 37 is a plate disposed on the cell assembly 20 side, and the outer plate 38 is a plate disposed outside of the inner plate 37 and coupled to an external surface of the inner plate 37.

The inner plate 37 is integrally formed with the first side plate 35 described above. Therefore, the inner plate 37 and the first side plate 35 may be configured by pressing one metal plate.

The outer plate 38 is joined to the lower surface, which is the external surface of the inner plate 37. In this case, the entirety of the outer plate 38 is not joined but only partially joined, and at least a portion of the unbonded part may be spaced apart from the inner plate 37. The space between the inner plate 37 and the outer plate 38 formed thereby may be used as a cooling passage 36.

To this end, the lower plate 31 of this embodiment may include a first joining portion S1 formed along an edge of the outer plate 38 and a second joining portion S2 disposed inside the outer plate 38.

The first joining portion S1 may be formed on the entirety of the edge of the outer plate 38. Therefore, the entire edge of the outer plate 38 may be bonded to the inner plate 37. The first joining portion S1 may be bonded to the inner plate 37 through welding.

Cold Metal Transfer (CMT) welding may be used to bond the first joining portion S1. Accordingly, a joining member 80 may be disposed between the first joining portion S1 and the inner plate 37 along the edge of the outer plate 38 to join the outer plate 38 and the inner plate 37 to each other. The joining member 80 may be formed by welding.

The second joining portion S2 is a portion that is joined to the inner plate 37 inside the outer plate 38, and may be provided as one or a plurality, as required. The second joining portion S2 may be spaced apart from the first joining portion S1 and may be disposed in one or a plurality of regions among the inner regions of the outer plate 38.

Areas other than the first joining portion S1 and the second joining portion S2 in the outer plate 38 may be used as the cooling passage 36. To this end, at least a portion of the outer plate 38 in these areas may be spaced apart from the inner plate 37 by a predetermined distance, and thus, a spacing space formed accordingly may be used as the cooling passage 36.

The second joining portion S2 may be used to configure the shape and path of the cooling passage 36. For example, the second joining portion S2 may be disposed to branch the cooling passage 36 into a plurality of pieces or to change the direction of the cooling passage 36. The second joining portion S2 may be formed in a linear or dot shape, but the shape is not limited thereto.

The cooling passage 36 is entirely disposed inside the outer plate 38. In this embodiment, the cooling passage 36 may be configured to be branched into three by the second joining portion S2. However, the shape of the cooling passage 36 may be modified to have various forms as required.

The second joining portion S2 may be joined to the inner plate 37 through welding. In the case of the second joining portion S2, since welding should be performed through the external surface of the outer plate 38, friction stir welding (FSW) may be used for joining the second joining portion S2. However, the embodiment is not limited thereto.

The outer plate 38, configured as described above, may be manufactured by pressing a metal plate.

On the other hand, in this embodiment, one side of the inner plate 37 may be provided with an inlet 62 and an outlet 64 of the cooling passage 36. Therefore, the cooling water may be introduced into the cooling passage 36 described above, through the inlet 62, may pass through the cooling passage 36, and may then be discharged to the outside of the cooling passage 36 through the outlet 64. However, the configuration of the embodiment is not limited thereto and may be modified variously. For example, if necessary, the outlet 64 and the inlet 62 may be disposed on the outer plate 38 or may be distributedly disposed on the outer plate 38 and the inner plate 37, respectively.

The first case 30 configured as described above may be formed of a material having high thermal conductivity such as metal. For example, the first case 30 may be formed of aluminum, but the material is not limited thereto. Therefore, various materials may be used as long as the material has similar strength and thermal conductivity even if the material is not a metal.

In this embodiment, the inner plate 37 and the outer plate 38 may be formed of the same material, for example, aluminum, but the material is not limited thereto. For example, the inner plate 37 and the outer plate 38 may also be formed of different materials.

The second case 40 includes an upper plate 42 and at least one second side plate 45, disposed on an upper portion of the battery cell 10.

The upper plate 42 is coupled to an upper surface of the cell assembly 20, and the second side plate 45 may be disposed on a side of the cell assembly 20, on which the first side plate 35 is not disposed, from among sides of the cell assembly 20.

In this embodiment, the first side plate 35 is disposed on two opposite sides of four sides of the cell assembly 20, and the second side plate 45 is disposed on the other two opposite sides. On the other hand, in a case in which the first side plate 35 is disposed on all four sides of the cell assembly 20, the second side plate 45 may be omitted. Similarly, in a case in which the second side plate 45 is disposed on all four sides of the cell assembly 20, the first side plate 35 may be omitted.

The upper plate 42 is formed integrally with the second side plate 45. Therefore, the upper plate 42 and the second side plate 45 may be configured by pressing one metal plate.

The upper plate 42 is formed to have a flat plate shape, and may include through-holes 47 disposed with connection terminals 19, to expose the connection terminals 19 provided in the cell assembly 20 to the outside of the case 50.

On the other hand, when the second case 40 and the first case 30 are combined, the lower end of the second side plate 45 is inserted into the insertion groove 39 formed in the first case 30. Therefore, the lower end of the second side plate 45 may be configured to be disposed in a position corresponding to the insertion groove 39.

Similarly to the first case 30, the second case 40 is formed of a material having relatively high thermal conductivity, such as metal. The second case 40 may be formed of aluminum. However, the embodiments are not limited thereto, and various materials may be used as long as the material has similar strength and thermal conductivity, even if the material is not a metal.

The first case 30 and the second case 40 may be combined by welding or the like.

For example, as illustrated in FIG. 7, after applying a liquid adhesive 90 to the insertion groove 39, the second case 40 is coupled to the first case 30 to primarily bond the first case 30 and the second case 40 to each other, and then, to ultimately join the first case 30 and the second case by welding contact portions (for example, an upper end of the linear guide) of the first case 30 and the second case 40.

However, the embodiment is not limited thereto, and various modifications may be applied, such as combining by a sliding method, using a fixing member such as a bolt or a screw, or the combination thereof.

A heat transfer member 60 may be disposed between the cell assembly 20 and the first case 30. The heat transfer member 60 may be formed of a material having relatively high thermal conductivity, for example, epoxy, urethane, silicone, acrylic resin, etc., but the material is not limited thereto.

The heat transfer member 60 may be formed by applying a liquid or gel material to the lower plate 31 and curing the same. Accordingly, the heat transfer member 60 may be disposed in a form filling the space between the cell assembly 20 and the first case 30.

By the heat transfer member 60, the cell assembly 20 may be securely fixed to the case 50 in the interior space of the case 50, and heat emitted from the cell assembly 20 is passed through the heat transfer member 60, and may be quickly transferred to the second case 40. Also, as the heat transfer member 60 is disposed between the cell assembly 20 and the case 50, the overall rigidity of the battery module 100 may also be reinforced.

As a material of the heat transfer member 60 in this embodiment, a material having relatively high insulating properties, for example, a dielectric strength in the range of 10 to 30 KV/mm, may be used. Accordingly, in the battery module 100 according to this embodiment, even in a case in which the insulation is partially destroyed in the battery cell 10, the insulation between the cell assembly 20 and the case 50 may be maintained by the heat transfer member 60 disposed between the case 50 and the cell assembly 20.

On the other hand, in this embodiment, since the thickness of the cell assembly 20 is not thick, heat may be radiated through the cooling passage 36 provided in the first case 30. Accordingly, this embodiment only provides a case in which the heat transfer member 60 is disposed between the cell assembly 20 and the lower plate 31 of the first case 30, as an example. However, the configuration of the present disclosure is not limited thereto. For example, in a case in which the thickness of the cell assembly 20 relatively increases, a cooling passage may also be provided in the second case 40, and in this case, the heat transfer member 60 may also be disposed between the cell assembly 20 and the second case 20.

An insulating cover 70 may be disposed between the cell assembly 20 and the second case 40. The insulating cover 70 is formed of an insulating material to maintain insulation between the cell assembly 20 and the second case 40. Therefore, the insulating cover 70 is configured to cover the entire upper surface of the cell assembly 20, and may also be configured to partially cover a side surface of the cell assembly 20 as required.

As described above, in the case in which the heat transfer member is also disposed between the cell assembly 20 and the second case 40, the insulating cover 70 may be omitted.

In the battery module 100 according to this embodiment configured as described above, the first case 30 supporting the lower surface of the cell assembly 20 may include the cooling passage 36. Therefore, since the cell assembly 20 and the cooling passage 36 are disposed as closely as possible, the cooling efficiency of the cell assembly 20 may be increased.

In addition, since the cooling passage 36 is provided in the case 50 of the battery module 100, a separate cooling device does not need to be provided in the installation where the battery module 100 is mounted.

In addition, since the heat transfer member 60 fills the space between the cell assembly 20 and the case 50, the cell assembly 20 is firmly fixed to the case 50, thereby preventing the battery cell 10 from shaking due to external vibrations or shocks.

In addition, the first joining portion S1 disposed along the edge of the outer plate 38 is joined to the inner plate 37 through CMT welding forming the joining member 80, and the second bonding portion S2 disposed inside the outer plate 38 may be bonded to the inner plate 37 through friction stir welding (FSW). Therefore, the joining member 80 is formed between the first joining portion S1 and the inner plate 37 to tightly seal between the edge of the outer plate 38 and the inner plate 37. Accordingly, the cooling water may be prevented from flowing out between the outer plate 38 and the inner plate 37.

In addition, the second case 40 is inserted into the insertion groove 39 formed in the first case 30, such that the first case 30 and the second case 40 may be coupled to each other. Therefore, combining the first case 30 and the second case 40 may be facilitated, and thus, the manufacturing thereof is relatively easy.

In addition, since the first and second cases 40 are combined using the liquid adhesive 90 and welding together, a more robust case 50 may be provided.

As set forth above, in a battery module according to an exemplary embodiment, a first case supporting the lower surface of a cell assembly includes a cooling passage. Therefore, since the cell assembly and the cooling passage are disposed as closely as possible, the cooling efficiency of the cell assembly may be increased.

## Claims

1. A battery module (100) comprising:
a cell assembly (20) in which a plurality of battery cells (10) are stacked;
a lower plate (31), having a cooling passage (36) and disposed below the cell assembly (20);
a first case (30) including the lower plate (31) and one or more first side plates (35) supporting the side of the cell assembly (20); and
a second case (40) disposed on an upper portion of the cell assembly (20) and coupled to the first case (30),
wherein the lower plate (31) includes an inner plate (37) disposed below the cell assembly (20), and an outer plate (38) disposed below the inner plate (37),
wherein the outer plate (38) includes a first joining portion (S1) and a second joining portion (S2) through which the outer plate (38) is partially bonded to the inner plate (37), the first joining portion (S1) being an edge area of the outer plate (38), the second joining portion (S2) being a portion of an inner area of the outer plate (38), and
**characterized in that** the first side plates (35) are formed to extend from both sides of the lower plate (31) and are disposed on the sides of the cell assembly (20).

2. The battery module (100) of claim 1,
wherein the first case (30) has an insertion groove (39) into which a lower end of the second case (40) is inserted.

3. The battery module (100) of claim 2, wherein the second case (40) comprises an upper plate (42) disposed on an upper portion of the cell assembly (20), and at least one side plate (45) extending from the upper plate (42) and disposed on a side of the cell assembly (20), and
a lower end of the side plate (45) is inserted into the insertion groove (39).

4. The battery module (100) of claim 1, wherein the cooling passage (36) is disposed between the inner plate (37) and the outer plate (38).

5. The battery module (100) of claim 4, further comprising an inlet (62) and an outlet (64) fastened to the inner plate (37) and used as passages for cooling water to move to the cooling passage (36).

6. The battery module (100) of claim 1, wherein the first joining portion (S1) further comprises a joining member (80) disposed along an edge of the outer plate (38) to join the outer plate (38) to the inner plate (37).

7. The battery module (100) of claim 1, wherein the first joining portion (S1) is bonded to the inner plate (37) by cold metal transfer (CMT) welding.

8. The battery module (100) of claim 1, wherein the second joining portion (S2) is spaced apart from the first j oining portion (S1).

9. The battery module (100) of claim 1, wherein the second joining portion (S2) is bonded to the inner plate (37) by friction stir welding (FSW).

10. The battery module (100) of claim 1, wherein the inner plate (37) and the outer plate (38) are formed of the same material.

## Patentansprüche

1. Batteriemodul (100), umfassend:
eine Zellenanordnung (20), in der eine Vielzahl von Batteriezellen (10) gestapelt ist;
eine untere Platte (31), die einen Kühlkanal (36) aufweist und unter der Zellenanordnung (20) angeordnet ist;
ein erstes Gehäuse (30), das die untere Platte (31) und eine oder mehrere erste Seitenplatten (35), die die Seite der Zellenanordnung (20) stützen, umfasst; und
ein zweites Gehäuse (40), das an einem oberen Abschnitt der Zellenanordnung (20) angeordnet und mit dem ersten Gehäuse (30) gekoppelt ist,
wobei die untere Platte (31) eine innere Platte (37), die unter der Zellenanordnung (20) angeordnet ist, und eine äußere Platte (38), die unter der inneren Platte (37) angeordnet ist, umfasst,
wobei die äußere Platte (38) einen ersten Verbindungsabschnitt (S1) und einen zweiten Verbindungsabschnitt (S2) umfasst, durch die die äußere Platte (38) teilweise mit der inneren Platte (37) verbunden ist, wobei der erste Verbindungsabschnitt (S1) ein Randbereich der äußeren Platte (38) ist, wobei der zweite Verbindungsabschnitt (S2) ein Abschnitt eines Innenbereichs der äußeren Platte (38) ist, und
**dadurch gekennzeichnet, dass** die ersten Seitenplatten (35) so ausgebildet sind, dass sie sich von beiden Seiten der unteren Platte (31) erstrecken und an den Seiten der Zellenanordnung (20) angeordnet sind.

2. Batteriemodul (100) nach Anspruch 1,
wobei das erste Gehäuse (30) eine Einsetznut (39) aufweist, in die ein unteres Ende des zweiten Gehäuses (40) eingesetzt ist.

3. Batteriemodul (100) nach Anspruch 2, wobei das zweite Gehäuse (40) eine obere Platte (42), die an einem oberen Abschnitt der Zellenanordnung (20) angeordnet ist, und mindestens eine Seitenplatte (45), die sich von der oberen Platte (42) erstreckt und an einer Seite der Zellenanordnung (20) angeordnet ist, umfasst, und
ein unteres Ende der Seitenplatte (45) in die Einsetznut (39) eingesetzt ist.

4. Batteriemodul (100) nach Anspruch 1, wobei der Kühlkanal (36) zwischen der inneren Platte (37) und der äußeren Platte (38) angeordnet ist.

5. Batteriemodul (100) nach Anspruch 4, ferner umfassend einen Einlass (62) und einen Auslass (64), die an der inneren Platte (37) befestigt sind und als Kanäle für Kühlwasser verwendet werden, um sich zu dem Kühlkanal (36) zu bewegen.

6. Batteriemodul (100) nach Anspruch 1, wobei der erste Verbindungsabschnitt (S1) ferner ein Verbindungselement (80) umfasst, das entlang eines Rands der äußeren Platte (38) angeordnet ist, um die äußere Platte (38) mit der inneren Platte (37) zu verbinden.

7. Batteriemodul (100) nach Anspruch 1, wobei der erste Verbindungsabschnitt (S1) durch Kaltmetalltransfer(CMT)-Schweißen mit der inneren Platte (37) verbunden ist.

8. Batteriemodul (100) nach Anspruch 1, wobei der zweite Verbindungsabschnitt (S2) von dem ersten Verbindungsabschnitt (S1) beabstandet ist.

9. Batteriemodul (100) nach Anspruch 1, wobei der zweite Verbindungsabschnitt (S2) durch Reibrühr(FSW)-Schweißen mit der inneren Platte (37) verbunden ist.

10. Batteriemodul (100) nach Anspruch 1, wobei die innere Platte (37) und die äußere Platte (38) aus dem gleichen Material gebildet sind.

## Revendications

1. Module de batterie (100) comprenant :
un ensemble de cellules (20) dans lequel sont empilées une pluralité de cellules de batterie (10) ;
une plaque inférieure (31) comportant un canal de refroidissement (36) et disposée sous l'ensemble de cellules (20) ;
un premier boîtier (30) comprenant la plaque inférieure (31) et une ou plusieurs premières plaques latérales (35) qui soutiennent le côté de l'ensemble de cellules (20) ; et
un deuxième boîtier (40) disposé au niveau d'une partie supérieure de l'ensemble de cellules (20) et couplé au premier boîtier (30),
la plaque inférieure (31) comprenant une plaque intérieure (37), disposée sous l'ensemble de cellules (20), et une plaque extérieure (38), disposée sous la plaque intérieure (37),
la plaque extérieure (38) comportant une première partie de liaison (S1) et une deuxième partie de liaison (S2) par lesquelles la plaque extérieure (38) est partiellement reliée à la plaque intérieure (37), la première partie de liaison (S1) étant une zone de bord de la plaque extérieure (38), la deuxième partie de liaison (S2) étant une partie d'une zone intérieure de la plaque extérieure (38), et
**caractérisé en ce que** les premières plaques latérales (35) sont conçues de manière à s'étendre des deux côtés de la plaque inférieure (31) et sont disposées sur les côtés de l' e ensemble de cellules (20).

2. Module de batterie (100) selon la revendication 1,
dans lequel le premier boîtier (30) comporte une rainure d'insertion (39) dans laquelle est insérée une extrémité inférieure du deuxième boîtier (40).

3. Module de batterie (100) selon la revendication 2, dans lequel le deuxième boîtier (40) comporte une plaque supérieure (42) disposée au niveau d'une partie supérieure de l'ensemble de cellules (20) et au moins une plaque latérale (45) s'étendant à partir de la plaque supérieure (42) et disposée sur un côté de l'ensemble de cellules (20), et
une extrémité inférieure de la plaque latérale (45) est insérée dans la rainure d'insertion (39).

4. Module de batterie (100) selon la revendication 1, dans lequel le canal de refroidissement (36) est disposé entre la plaque intérieure (37) et la plaque extérieure (38).

5. Module de batterie (100) selon la revendication 4, comprenant en outre une entrée (62) et une sortie (64) qui sont fixées à la plaque intérieure (37) et qui servent de canaux pour l'eau de refroidissement afin qu'elle s'écoule vers le canal de refroidissement (36).

6. Module de batterie (100) selon la revendication 1, dans lequel la première partie de liaison (S1) comprend en outre un élément de liaison (80) disposé le long d'un bord de la plaque extérieure (38) afin de relier la plaque extérieure (38) à la plaque intérieure (37).

7. Module de batterie (100) selon la revendication 1, dans lequel la première partie de liaison (S1) est reliée à la plaque intérieure (37) par soudage par transfert de métal à froid (CMT).

8. Module de batterie (100) selon la revendication 1, dans lequel la deuxième partie de liaison (S2) est espacée de la première partie de liaison (S1).

9. Module de batterie (100) selon la revendication 1, dans lequel la deuxième partie de liaison (S2) est reliée à la plaque intérieure (37) par soudage par friction-malaxage (FSW).

10. Module de batterie (100) selon la revendication 1, dans lequel la plaque intérieure (37) et la plaque extérieure (38) sont constituées du même matériau.
